# EUROPEAN PATENT SPECIFICATION

(11) **EP 1 112 874 B1**
(45) Date of publication and mention of the grant of the patent: **22.03.2006**
(21) Application number: 00127729.2
(22) Date of filing: 18.12.2000
(51) Int. Cl.: B60H 1/32

(54) **A climate control system for the passenger compartment of a motor vehicle**
Klimaregelanordnung für einen Kraftfahrzeugfahrgastraum
Système de commande de climatisation de l'habitacle d'un véhicule automobile à moteur

(30) Priority: 21.12.1999 IT TO991121
(43) Date of publication of application: 04.07.2001
(73) Proprietor: FIAT AUTO S.p.A., 10135 Torino (IT)
(72) Inventor: Mingrino, Fabio, 10128 Torino (IT)
(74) Representative: Quinterno, Giuseppe

(56) References cited:
- EP-A- 0 686 818
- US-A- 4 590 772
- US-A- 5 241 833
- US-A- 5 647 222

## Description

The present invention relates to a climate control system for the passenger compartment of a motor vehicle.

More specifically, the object of the invention is a climate control system which includes
a compressor with its output connected to the intake of a condenser with, downstream, fluid expansion means and an evaporator with its output connected to the suction intake of the compressor, with an analogue electric pressure sensor arranged near the condenser; and
an electronic control unit set to control the operation of the compressor and possibly other devices in the system in dependence on pressure signals supplied by the analogue sensor and on the temperature outside the compartment.

Such a climate control system is disclosed in US 5647222

In climate control systems of this type in the prior art, the temperature outside the vehicle is measured by an appropriate sensor or by measuring the temperature in the engine intake manifold.

One object of the present invention is to provide a climate control system which does not require a special sensor for measuring the temperature outside the vehicle.

This and other objects are achieved according to the invention by providing a climate control system having the essential characteristics claimed in the appended Claim 1.

The invention is based on the fact that when the compressor of the climate control system is turned off, the signal from the analogue pressure sensor arranged near the condenser is substantially proportional to (or at least unequivocally indicative of) the outside temperature.

In operation, the compressor can be periodically turned off in order to measure the outside temperature by disengaging the clutch arranged between the vehicle engine and the compressor, provided the latter is not of a controllable capacity type. If the compressor is of a variable capacity type, it can be turned off by means of the pulse width modulation (PWM) signal which is typically used to control the compressor.

Further characteristics and advantages of the invention will become apparent from the detailed description which follows, provided purely by way of non-limitative example, with reference to the appended drawing, which consists of a block diagram illustrating a system of the invention.

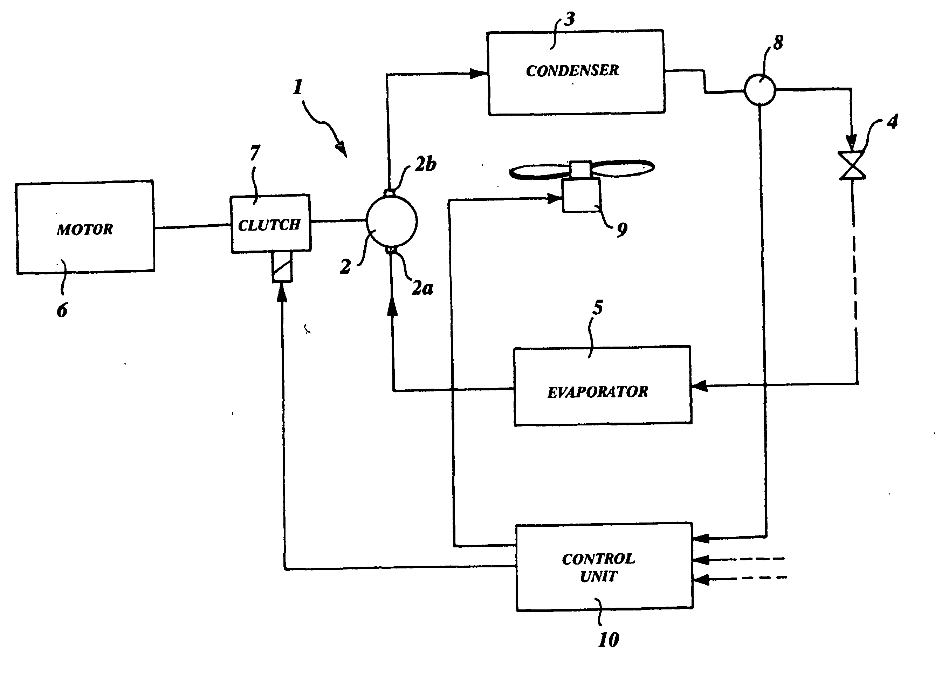

In Figure 1, a climate control system according to the invention for the passenger compartment of a motor vehicle is generally indicated 1.

This climate control system includes a compressor 2 the exit aperture or output 2b of which is connected to the intake of a condenser 3. The output of the condenser 3 is connected to an expansion device, such as a by-pass valve 4, connected in turn to the intake of an evaporator 5. The output of the evaporator is connected to the intake aperture 2a of the compressor 2.

In the embodiment illustrated by way of example, the compressor 2 is rotatable by the internal combustion engine 6 of the vehicle, being coupled thereto by means of an electrically operated clutch 7.

An analogue pressure sensor, in particular a linear sensor, indicated 8, is arranged in the cooling circuit, preferably near the outlet of the condenser 3. This sensor, which could also be positioned near the condenser intake, is connected to an input of an electronic control unit 10. Further sensors, which are not shown, are also connected in a known manner to the unit 10.

The unit 10 controls activation of the compressor 2 by operating the clutch 7. This unit also controls the operation of an electric fan 9 which is associated with the condenser 3 (and possibly also with the radiator of the engine-cooling circuit).

In operation, when the compressor 2 is working (with the clutch 7 engaged) the signal from the analogue pressure sensor 8 to the control unit 10 indicates the pressure, at that moment, of fluid output from the condenser 3.

When the compressor 2 is turned off, the pressure given by the analogue sensor 8 indicates the temperature outside the vehicle.

The control unit 10 is set to turn the compressor 2 off periodically (by means of the clutch 7) in order to be able to interpret the signal supplied by the pressure sensor 8 as indicating the temperature outside the vehicle.

In this way, the control unit 10 can measure the temperature outside the vehicle without having to include a special sensor in the system.

The invention can also be applied to a climate control system with a variable-capacity compressor. In such a system, it is convenient if the control unit is set to control periodic breaks in the operation of the compressor, not by controlling a clutch interposed between the engine and the compressor, but by altering the characteristics of the pulse width modulation (PWM) signal which controls the compressor.

Naturally, the principle of the invention remaining unchanged, embodiments and manufacturing details may be varied widely from those described and illustrated purely by way of non-limitative example, without departing thereby from the invention, as claimed in the appended claims.

## Claims

1. A climate control system (1) for the passenger compartment of a motor vehicle, which includes
a compressor (2) with its output (2b) connected to the intake of a condenser (3) upstream of fluid-expansion means (4) and an evaporator (5), the output of which is connected to the intake (2a) of the compressor (2); an electric pressure sensor (8) of an analogue type being positioned near the condenser (3); and
an electronic control unit (10) set to control the operation of the compressor (2) and any other devices (9) in the system in dependence on pressure signals provided by the said analogue sensor (8) and on the temperature outside the motor vehicle;
the system being **characterised in that** the said control unit (10) is set to control periodic interruption in the operation of the compressor (2) and, while the compressor (2) is inactive, to receive the signal provided by the said analogue pressure sensor (8) and to process it so as to indicate the temperature outside the vehicle.

2. A system according to Claim 1, **characterised in that** the compressor is coupled to the engine (6) of the motor vehicle by means of an electrically-controlled clutch (7) controlled by the said unit (10), and **in that** the said unit (10) is set to control the aforesaid interruptions in the operation of the compressor (2) by correspondingly disengaging the said clutch (7).

3. A system according to Claim 1, **characterised in that** the compressor (2) is of a variable-capacity type and is controlled by an electric pulse width modulation (PWM) signal, while the control unit (10) is set to control the aforesaid periodic interruptions in the operation of the compressor (2) by means of corresponding variations in the said control signal.

## Patentansprüche

1. Klima-Steuersystem (1) für den Fahrgastraum eines Kraftfahrzeugs, wobei das Klima-Steuersystem aufweist: einen Kompressor (2), dessen Auslass (2b) mit dem Einlass eines Kondensators (3) verbunden ist, der stromaufwärts einer Fluid-Expansionseinrichtung (4) sowie eines Verdampfers (5) liegt, dessen Auslass mit dem Einlass (2a) des Kompressors (2) verbunden ist; wobei ein analoger elektrischer Drucksensor (8) in der Nähe des Kondensators (3) angeordnet ist; und
eine elektronische Steuereinheit (10), die so aufgebaut ist, dass sie die Arbeitsweise des Kompressors (2) sowie irgendwelcher anderer Einrichtungen (9) im System in Abhängigkeit von Drucksignalen, die der analoge Sensor (8) liefert, sowie von der Temperatur außerhalb des Kraftfahrzeugs steuert;
wobei das System **dadurch gekennzeichnet ist, dass** die Steuereinheit (10) so aufgebaut ist, dass sie eine periodische Unterbrechung in der Arbeitsweise des Kompressors (2) steuert, und dann, wenn der Kompressor (2) außer Betrieb steht, das Signal empfängt, das der analoge Drucksensor (8) liefert, und dieses Signal verarbeitet, um die Temperatur außerhalb des Fahrzeugs anzuzeigen.

2. System gemäß Anspruch 1, **dadurch gekennzeichnet, dass** der Kompressor mit dem Motor (6) des Kraftfahrzeugs über eine elektrisch gesteuerte Kupplung (7) gekuppelt ist, die von der Einheit (10) gesteuert wird, und dass die Einheit (10) so aufgebaut ist, dass sie die oben erwähnten Unterbrechungen in der Arbeitsweise des Kompressors (2) **dadurch** steuert, dass sie die Kupplung (7) entsprechend ausrückt.

3. System gemäß Anspruch 1, **dadurch gekennzeichnet, dass** der Kompressor (2) ein Kompressor mit variabler Leistung ist und mit einem elektrischen Impulsbreitenmodulations-(PWM)-Signal gesteuert wird, wobei die Steuereinheit (10) so aufgebaut ist, dass sie die oben erwähnten periodischen Unterbrechungen in der Arbeitsweise des Kompressors (2) mit Hilfe von entsprechenden Änderungen in diesem Steuersignal steuert.

## Revendications

1. Système de commande de climatisation (1) de l'habitacle d'un véhicule automobile, comprenant
un compresseur (2) avec sa sortie (2b) connectée à l'admission d'un condenseur (3) en amont de moyens de dilatation de fluide (4) et un évaporateur (5), dont la sortie est connectée à l'admission (2a) du compresseur (2) ; un capteur de pression électrique (8) de type analogique positionné près du condenseur (3) ; et
une unité de commande électronique (10) agencée pour commander le fonctionnement du compresseur (2) et d'autres dispositifs (9) dans le système en fonction de signaux de pression délivrés par ledit capteur analogique (8) et de la température à l'extérieur du véhicule automobile ;
système **caractérisé en ce que** ladite unité de commande (10) est agencée pour commander une interruption périodique du fonctionnement du compresseur (2) et, tandis que le compresseur (2) est inactif, pour recevoir le signal délivré par ledit capteur de pression analogique (8) et pour le traiter de manière à indiquer la température à l'extérieur du véhicule.

2. Système selon la revendication 1, **caractérisé en ce que** le compresseur est couplé au moteur (6) du véhicule automobile à l'aide d'un embrayage (7) commandé électriquement par ladite unité (10), et **en ce que** ladite unité (10) est agencée pour commander les interruptions précitées du fonctionnement du compresseur (2) en dégageant de façon correspondante ledit embrayage (7).

3. Système selon la revendication 1, **caractérisé en ce que** le compresseur (2) est du type à capacité variable et est commandé par un signal de modulation de largeur d'impulsion (PWM), tandis que l'unité de commande (10) est agencée pour commander les interruptions périodiques précitées du fonctionnement du compresseur (2) par des variations correspondantes dudit signal de commande.
